# EUROPEAN PATENT SPECIFICATION

(11) **EP 2 831 701 B1**
(45) Date of publication and mention of the grant of the patent: **14.06.2017**
(21) Application number: 13712937.5
(22) Date of filing: 06.03.2013
(51) Int. Cl.: G06F 3/01, G06F 3/03, G06T 19/00, A63F 13/52, A63F 13/213

(54) **DISPLAY CONTROL DEVICE, DISPLAY CONTROL METHOD, AND PROGRAM**
ANZEIGENSTEUERUNG, - VERFAHREN UND -PROGRAMM
SYSTEME DE CONTROLE D'ECRAN, METHODE DE CONTROLE ET PROGRAMME

(30) Priority: 27.03.2012 JP 2012071332
(43) Date of publication of application: 04.02.2015
(73) Proprietor: Sony Corporation, Tokyo 108-0075 (JP)
(72) Inventor: KASAHARA, Shunichi, Tokyo 108-0075 (JP); SHIGETA, Osamu, Tokyo 108-0075 (JP); SUZUKI, Seiji, Tokyo 108-0075 (JP); FUKAZAWA, Ryo, Tokyo 108-0075 (JP); MORI, Maki, Tokyo 108-0075 (JP)
(74) Representative: MFG Patentanwälte Meyer-Wildhagen Meggle-Freund Gerhard PartG mbB
(86) International application number: PCT/JP2013/001398
(87) International publication number: WO 2013/145572

(56) References cited:
- WO-A1-2010/008373
- NL-C- 1 038 375
- US-A1- 2011 300 929

## Description

### Technical Field

The present disclosure relates to a display control device, a display control method, and a program.

### Background Art

In recent years, there has been developed a technology which uses an imaging result (for example, a gesture of a user or the like) of a user captured by an imaging device as an input interface.

According to the technology, for example, it becomes possible to control an object added to a region corresponding to a position of the user shown in the captured image (for example, a position of a part of or entire body of the user). In the technology using the input interface, in general, a captured image taken by an imaging device which is installed facing the user is used, and the object added to the region corresponding to a two-dimensional position of the user shown in the captured image is controlled.

For example, there is disclosed a technology for detecting a moving two-dimensional region from a captured image taken by an imaging device which is installed facing a user, and controlling, in accordance with the detection results, movement of an object included in a computer image (for example, refer to PTL 1).

From US patent application US 2011/0300929 A1 a system and method for synthesizing information received from multiple audio and visual sources focused on a single scene are known. The system may determine the positions of capture devices based on a common set of cues identified in the image data of the capture devices. As a scene may often have users and objects moving into and out of the scene, data from the multiple capture devices may be time synchronized to ensure that data from the audio and visual sources are providing data of the same scene at the same time. Audio and/or visual data from the multiple sources may be reconciled and assimilated together to improve an ability of the system to interpret audio and/or visual aspects from the scene.

### Citation List

### Patent Literature

[PTL 1] JP2006-014875A

### Summary

### Technical Problem

However, an imaging device is not installed facing the user all the time. For example, on the premise that a virtual object for operation is added to a captured image taken by an imaging device, in the case where the imaging device is installed obliquely back of the user, user operability is deteriorated when the virtual object for operation is added to the captured image by the same technique as in the case where the imaging device is installed facing the user. Accordingly, it is desired to realize a technology for enhancing the user operability.

### Solution to Problem

In view of the above, the present embodiments are provided. In an illustrative embodiment, a display control device includes a display control section to control display of a virtual object according to a positional relationship between an imaging device and a display device. [Advantageous Effects of Invention]

According to the embodiments of the present disclosure described above, the user operability can be enhanced.

### Brief Description of Drawings

[fig.1]FIG. 1 is a diagram showing an example of a configuration of a display control system according to a first embodiment.
[fig.2]FIG. 2 is a diagram showing an example of addition of a virtual object for operation in a case where the display control system is configured in accordance with the example shown in FIG. 1.
[fig.3]FIG. 3 is a diagram showing another example of the configuration of the display control system according to the first embodiment.
[fig.4]FIG. 4 is a diagram showing an example of addition of the virtual object for operation in a case where the display control system is configured in accordance with the example shown in FIG. 3.
[fig.5]FIG. 5 is a block diagram showing a functional configuration example of a display control device according to the first embodiment.
[fig.6]FIG. 6 is a diagram showing another example of the configuration of the display control system according to the first embodiment.
[fig.7]FIG. 7 is a diagram showing an example of addition of the virtual object for operation in a case where the display control system is configured in accordance with the example shown in FIG. 6.
[fig.8]FIG. 8 is a diagram showing another example of the addition of the virtual object for operation in the case where the display control system is configured in accordance with the example shown in FIG. 6.
[fig.9]FIG. 9 is a diagram showing an example in which a display of the virtual object for operation is changed.
[fig.10]FIG. 10 is a diagram showing another example in which the display of the virtual object for operation is changed.
[fig.11]FIG. 11 is a diagram showing another example in which the display of the virtual object for operation is changed.
[fig.12]FIG. 12 is a flowchart showing a flow of operation performed by the display control device according to the first embodiment.
[fig.13]FIG. 13 is a diagram showing an example of a configuration of a display control system according to a second embodiment.
[fig.14]FIG. 14 is a block diagram showing a functional configuration example of a display control device according to the second embodiment.
[fig.15]FIG. 15 is a flowchart showing a flow of operation performed by the display control device according to the second embodiment.

### Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, in this specification and the appended drawings, there are some cases where multiple structural elements that have substantially the same function and structure are distinguished from one another by being denoted with different alphabets after the same reference numeral. Note that, in the case where it is not necessary to distinguish the multiple structural elements that have substantially the same function and structure from one another, the multiple structural elements are denoted with the same reference numeral only.

Further, the "description of embodiments" will be described in the following order.
1. First Embodiment
2. Second Embodiment
3. Conclusion

### <1. First Embodiment>

Hereinafter, a first embodiment of the present disclosure will be described. First, an example of a configuration of a display control system according to the first embodiment of the present disclosure will be described. Note that this example corresponds to a configuration example of a display control system in the case where a mode is set to a first mode to be described later.

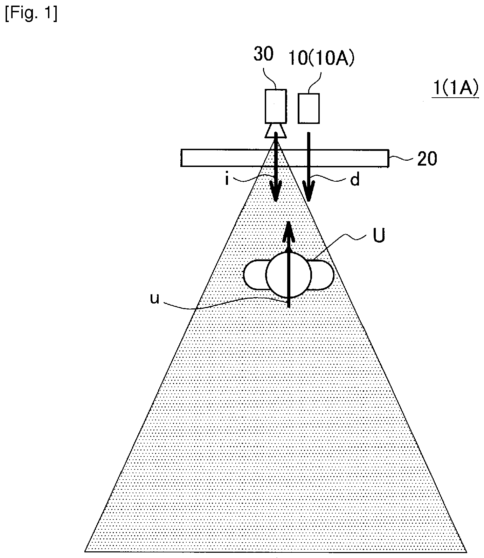

FIG. 1 is a diagram showing an example of a configuration of a display control system according to a first embodiment of the present disclosure. As shown in FIG. 1, a display control system 1A according to the first embodiment of the present disclosure includes a display control device 10A, a display device 20, and an imaging device 30. The imaging device 30 has a function of imaging a user U. The display control device 10A has a function of controlling the display device 20 in a manner that a captured image taken by the imaging device 30 is displayed on the display device 20. The display device 20 has a function of displaying the captured image in accordance with the control performed by the display control device 10A.

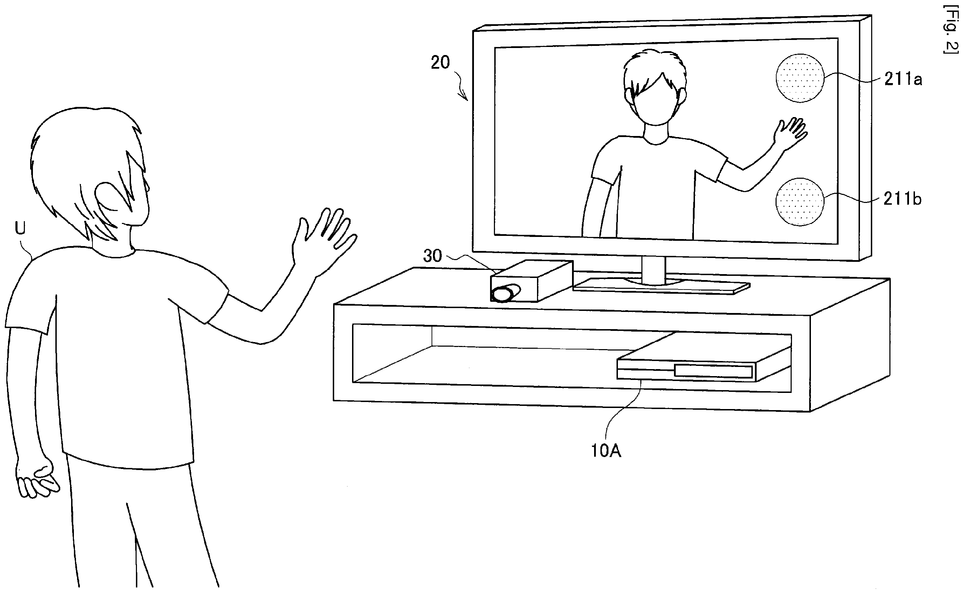

FIG. 2 is a diagram showing an example of addition of a virtual object for operation in a case where the display control system 1A is configured in accordance with the example shown in FIG. 1. As shown in FIG. 2, the captured image taken by the imaging device 30 is displayed on the display device 20, and virtual objects 211a and 211b for operation are added to the captured image. The example shown in FIG. 2 has two virtual objects for operation, but the number of virtual objects for operation is not particularly limited. Further, although FIG. 2 shows as an example the case where the display control device 10A is embedded in a set top box (STB), the display control device 10A may be embedded in the display device 20 or may be embedded in the imaging device 30. Further, the display control device 10A may be embedded in another device, or may not be embedded in another device and may exist as a single device.

Next, another example of the configuration of the display control system 1A according to the first embodiment of the present disclosure will be described. Note that this example corresponds to a configuration example of the display control system 1A in the case where a mode is set to a second mode to be described later.

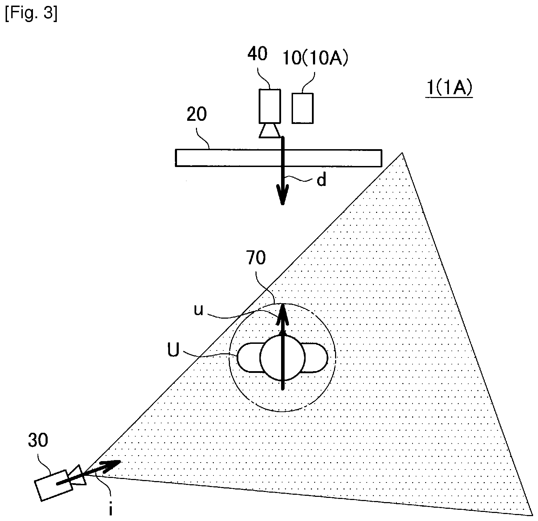

FIG. 3 is a diagram showing another example of the configuration of the display control system 1A according to the first embodiment of the present disclosure. As shown in FIG. 3, another example of the display control system 1A according to the first embodiment of the present disclosure includes a display control device 10A, a display device 20, an imaging device 30, and a detection device 40. The display control device 10A has a function of controlling the display device 20 in a manner that a captured image taken by the imaging device 30 is displayed on the display device 20. The detection device 40 has a function of detecting action of a user U. The detection device 40 may be a device which can acquire depth information, and may be configured from an infrared sensor, for example.

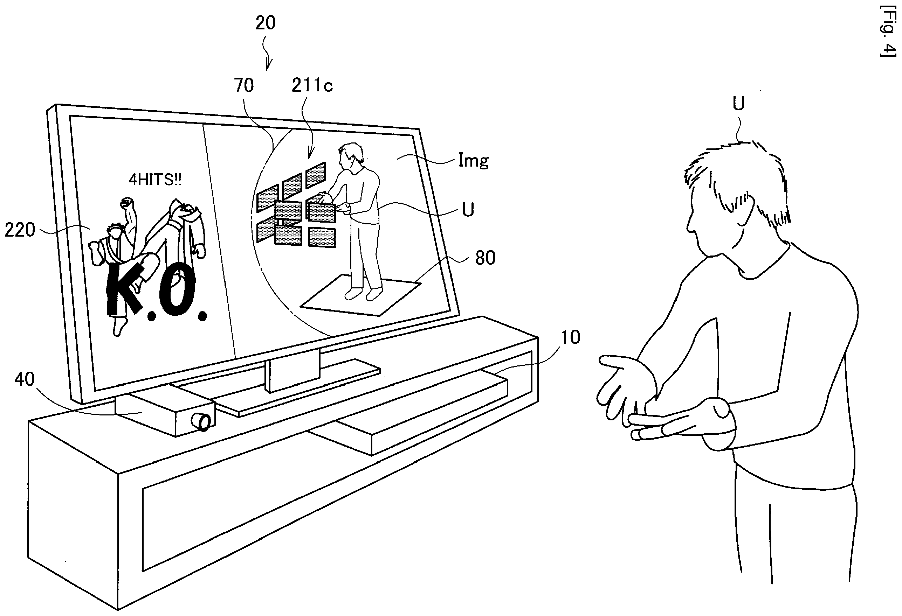

FIG. 4 is a diagram showing an example of addition of the virtual object for operation in a case where the display control system 1A is configured in accordance with the example shown in FIG. 3. As shown in FIG. 4, the captured image taken by the imaging device 30 is displayed on the display device 20, and virtual objects 211c for operation are added to the captured image. The example shown in FIG. 4 has ten virtual objects 211c for operation, but the number of virtual objects 211c for operation is not particularly limited. Further, although FIG. 4 shows as an example the case where the display control device 10A is embedded in the STB, the display control device 10A may be embedded in the display device 20, may be embedded in the imaging device 30, or may be embedded in the detection device 40. Further, the display control device 10A may be embedded in another device, or may not be embedded in another device and may exist as a single device.

In FIG. 4, a display screen of an application, which progresses based on a virtual object 211c for operation selected by the user U, is displayed as a computer image 220. Accordingly, the user U can determine which virtual object 211c for operation is to be selected while viewing the computer image 220. Although the computer image 220 is not displayed on the display device 20 shown in FIG. 2, the display device 20 shown in FIG. 2 may also have the computer image 220 displayed thereon in the same manner.

Heretofore, there have been described an example and another example of the configuration of the display control system 1A according to the first embodiment of the present disclosure. Next, there will be described functions of the display control device 10A in the case where the display control system 1A is configured as shown in those examples.

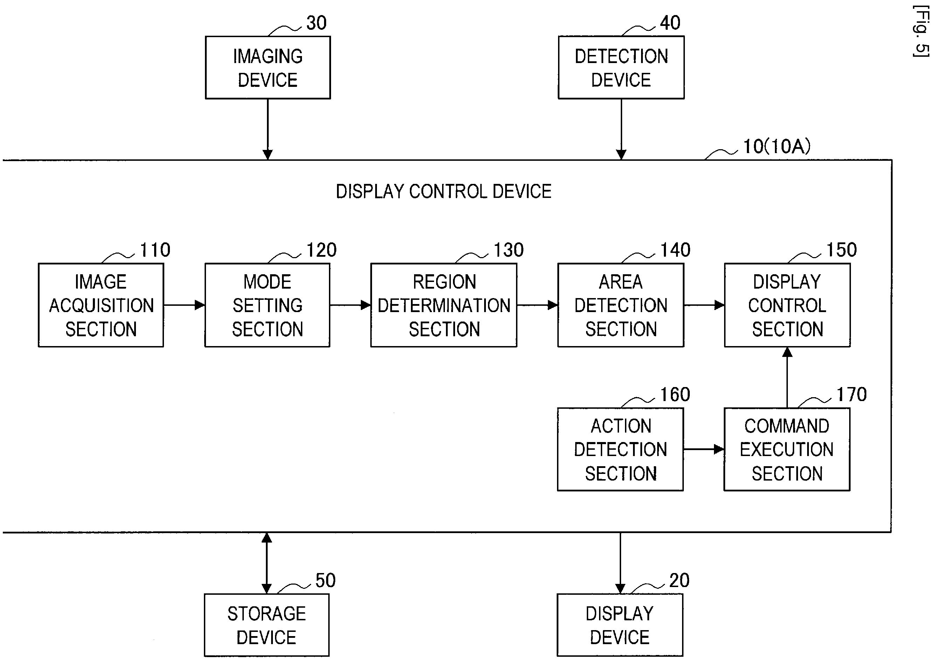

FIG. 5 is a block diagram showing a functional configuration example of the display control device 10A according to the first embodiment. As shown in FIG. 5, the display control device 10A is connected to the display device 20, the imaging device 30, the detection device 40, and to a storage device 50. Note that, in the case where the display control system 1A is configured in accordance with the example shown in FIG. 1, the detection device 40 may not particularly be present. Further, as shown in FIG. 5, the display control device 10A includes an image acquisition section 110, a mode setting section 120, a region determination section 130, an area detection section 140, a display control section 150, an action detection section 160, and a command execution section 170.

The display control device 10A corresponds to a processor such as a central processing unit (CPU) or a digital signal processor (DSP). The display control device 10A executes a program stored in the storage device 50 or another storage medium, and thereby operating various functions of the display control device 10A.

The storage device 50 stores a program and data for processing performed by the display control device 10A using a storage medium such as a semiconductor memory or a hard disk. For example, the storage device 50 stores a feature quantity dictionary used for item recognition. In addition, the storage device 50 can also store recognition results which are generated as results of item recognition. In the example shown in FIG. 5, the storage device 50 is a separate device from the display control device 10A, but the storage device 50 may also be embedded in the display control device 10A.

The image acquisition section 110 acquires a captured image taken by the imaging device 30. The display control section 150 controls the display device 20 in a manner that the captured image and a virtual object for operation added to the captured image are displayed on the display device 20. The display control section 150 controls the display of the virtual object for operation in accordance with the positional relationship between the imaging device 30 and the display device 20. With such a control, the display of the virtual object for operation can be changed flexibly, and hence, the user operability can be enhanced.

The positional relationship between the imaging device 30 and the display device 20 is not particularly limited, and for example, in the examples shown in FIG. 1 and FIG. 3, the positional relationship may be a relationship between a direction i of the imaging device and a direction d of the display device, and may be a relationship between a position of the imaging device 30 and a position of the display device 20. The control of the display of the virtual object for operation may be the control of a position of the virtual object for operation and may be the control of a degree of transparency of the virtual object for operation.

For example, the following two different modes may be prepared: a mode in which the virtual objects 211a and 211b for operation are each added at a two-dimensional position in the captured image (hereinafter, referred to as "first mode"); and a mode in which the virtual objects 211c for operation are each added at a position in the three-dimensional space recognized from the captured image (hereinafter, referred to as "second mode"). In the case where those two different modes are prepared, the mode setting section 120 sets the mode to any one of the first mode or the second mode, and the display control section 150 performs the addition of the virtual object for operation in accordance with the mode set by the mode setting section 120.

For example, FIG. 2 shows a display example of a case where the mode is set to the first mode by the mode setting section 120, and the virtual objects 211a and 211b for operation are added to the captured image in accordance with the first mode by the display control section 150. In this example, since the virtual objects 211a and 211b for operation are added at two-dimensional positions in the captured image, the user U can select the virtual objects 211a and 211b for operation without paying attention to the depth from the imaging device 30.

On the other hand, FIG. 4 shows a display example of a case where the mode is set to the second mode by the mode setting section 120, and the virtual objects 211c for operation are added to the captured image in accordance with the second mode by the display control section 150. In this example, since the virtual objects 211c for operation are added at positions in the three-dimensional space recognized from the captured image, the user U can select any one of the multiple virtual objects 211c using difference in depths from the imaging device 30.

In more detail, the positions at which the virtual objects 211c for operation are added are positions in the captured image of the virtual objects 211c for operation shown in the captured image in the case of assuming that the virtual objects 211c for operation are arranged in the three-dimensional space. In this case, the positions in the captured image of the virtual objects 211c for operation shown in the captured image can be easily estimated from the arrangement of the virtual objects 211c for operation in the three-dimensional space based on the direction i of the imaging device and an angle of view of the imaging device 30. The arrangement of the virtual objects 211c for operation in the three-dimensional space is determined in the above-mentioned application, for example.

In the case where the relationship between the direction i of the imaging device and the direction d of the display device is used, the mode setting section 120 may set the mode to any one of the first mode or the second mode in accordance with the angle between the direction i of the imaging device and the direction d of the display device. For example, in the case where the angle between the direction i of the imaging device and the direction d of the display device is less than a predetermined threshold, the mode setting section 120 may set the mode to the first mode, and in the case where the angle between the direction i of the imaging device and the direction d of the display device is more than the predetermined threshold, the mode setting section 120 may set the mode to the second mode.

Here, the predetermined threshold can be determined in advance. Further, in the case where the angle between the direction i of the imaging device and the direction d of the display device is equal to the predetermined threshold, the mode may be set to the first mode or may be set to the second mode. For example, let us assume the case where the predetermined threshold is 90 degrees. In this case, as shown in FIG. 1, in the case where the angle between the direction i of the imaging device and the direction d of the display device is less than 90 degrees, the mode may be set to the first mode (see FIG. 2), and as shown in FIG. 3, in the case where the angle between the direction i of the imaging device and the direction d of the display device is more than 90 degrees, the mode may be set to the second mode (see FIG. 4).

In this way, the first mode and the second mode may be switched therebetween based on the relationship between the angle between the direction i of the imaging device and the direction d of the display device and the predetermined threshold. In the case where the angle between the direction i of the imaging device and the direction d of the display device is more than the predetermined threshold (for example, in the case where imaging is performed from obliquely back of the user U), it is easier for the user U to distinguish, from a screen, multiple virtual objects for operation having different depths from the imaging device 30 in comparison with the case where the angle between the direction i of the imaging device and the direction d of the display device is less than the predetermined threshold (for example, in comparison with the case where the user U is imaged from the front face).

Further, each of the direction i of the imaging device and the direction d of the display device may be acquired in any way. For example, each of the direction i of the imaging device and the direction d of the display device may be input by the user U. Alternatively, the mode setting section 120 may use a direction u of the user as the direction d of the display device. For example, the mode setting section 120 can set the direction that is opposite to the direction u of the user as the direction d of the display device. The direction u of the user may be recognized from the captured image taken by the imaging device 30, or may be recognized from data detected by the detection device 40. Further, the direction u of the user may be the direction of the face of the user U, or may be the direction of the torso of the user U.

In determining which of the first mode and the second mode is to be set, a condition other than the angle between the direction i of the imaging device and the direction d of the display device may further be taken into account. For example, in the case where the mode is set to the first mode, when the angle between the direction u of the user and the direction i of the imaging device is more than a predetermined upper limit, the mode setting section 120 may set the mode to the second mode. Further, in the case where the mode is set to the second mode, when the angle between the direction u of the user and the direction i of the imaging device is less than a predetermined lower limit, the mode setting section 120 may set the mode to the first mode.

Here, the predetermined upper limit and the predetermined lower limit can be determined in advance. For example, in the case where the user U faces the direction in which the display device 20 is installed, the setting of the mode may be performed based on the angle between the direction i of the imaging device and the direction d of the display device, but it is also assumed that the user U may not be facing the direction in which the display device 20 is installed. Accordingly, by further taking the condition into account, the setting of the mode which reflects more accurately the direction u of the user can be performed.

Further, in causing the user U to select a virtual object for operation, a position at which the user U is to be present may be displayed. For example, the region determination section 130 may determine a region in which the selection of the virtual object for operation is possible in accordance with the positional relationship between the imaging device 30 and the display device 20. In this case, the display control section 150 may add, to the region determined by the region determination section 130, a virtual object 80 for display which indicates that the region represents a region in which the selection of the virtual object for operation is possible. With addition of the virtual object 80 for display, the user U can grasp the position at which the user U is to be present using the position indicated by the virtual object 80 for display.

For example, the region determination section 130 may determine the region in which the virtual object for operation can be selected based on the point of intersection of the line that extends from the position of the imaging device 30 in the direction i of the imaging device with the line that extends from the position of the display device 20 in the direction d of the display device. For example, the region determination section 130 may also determine, as the region in which the virtual object for operation can be selected, a region enclosed by a circle having the point of intersection as a reference or a region enclosed by a rectangle having the point of intersection as a reference.

Further, the virtual object for operation may be displayed with the state of the user U being taken into account. As an extreme example, there may be given a case where the user U performs operation while the user U is standing, and there may be assumed a case where the user U performs operation while the user U is seated. Accordingly, the area detection section 140 may detect a movable area 70 of the user U, and the display control section 150 may control the position of the virtual object for operation further based on the movable area 70 of the user U which is detected by the area detection section 140.

The movable area 70 of the user U represents an area in the three-dimensional space in which the user U can move his/her body, and may be detected by the area detection section 140 based on data detected by the detection device 40. The body is a part of or the whole body of the user U, and the hand of the user U can be given as an example thereof, but may also be another part of the body of the user U or be any object being moved by the body.

In more detail, the display control section 150 may control the position of the virtual object for operation in manner that the virtual object for operation is within the movable area 70 of the user U. With such a control, since the virtual object for operation is displayed with the state of the user U being taken into account, it is expected that the operability will be further enhanced. The detection of the movable area 70 of the user U may be performed at the timing that the user U specifies, or may be performed at the time at which the virtual object for operation is displayed. In the case where the detection of the movable area 70 of the user U is performed, the following message may be displayed on the display device 20 "stretch and move your hands within an area that you can reach comfortably".

The action detection section 160 detects an action of the user U. In the case where the mode is being set to the first mode by the mode setting section 120, for example, the action detection section 160 detects the action of the user U based on a captured image taken by the imaging device 30. Further, in the case where the mode is being set to the second mode by the mode setting section 120, for example, the action detection section 160 detects the action of the user U based on data detected by the detection device 40.

For example, in the case where the mode is being set to the first mode, since the virtual object for operation is added at a two-dimensional position in the captured image, a two-dimensional position of the body of the user U on the captured image may be detected as the action of the user U. Further, for example, in the case where the mode is being set to the second mode, since the virtual object for operation is added at a position in the three-dimensional space recognized from the captured image, a position of the body of the user U in the three-dimensional space may be detected as the action of the user U.

In more detail, in the case where the mode is being set to the first mode, the action detection section 160 may detect a user action for selecting the virtual object for operation when the two-dimensional positions in the captured image of the virtual object for operation and the body of the user U correspond to each other. Further, in the case where the mode is being set to the second mode, the action detection section 160 may detect a user action for selecting the virtual object for operation when the positions in the three-dimensional space of the virtual object for operation and the body of the user U correspond to each other.

The command execution section 170 executes a command corresponding to the virtual object for operation in the case where the user action for selecting the virtual object for operation is detected by the action detection section 160. For example, in the example shown in FIG. 2, in the case where the user action for selecting the virtual object 211a for operation is detected, the command execution section 170 executes a command for starting a service provided by an application, and in the case where the user action for selecting the virtual object 211b for operation is detected, the command execution section 170 executes a command for terminating the service provided by the application.

Further, in the example shown in FIG. 4, in the case where the user action for selecting the virtual object 211c for operation is detected, the command execution section 170 executes various types of commands in the service provided by the application. The commands to be executed may be different from each other for all the multiple virtual objects 211c for operation, or the commands may be the same as each other for some of the multiple virtual objects 211c for operation.

Heretofore, functions of the display control device 10A have been described. Note that, in the another example of the display control system 1A according to the first embodiment of the present disclosure (example shown in FIG. 3 and FIG. 4), the display device 20 is not included in the area to be imaged by the imaging device 30. However, there is also considered a case where the display device 20 is included in the imaging area. In below, the case where the display device 20 is included in the imaging area will be described.

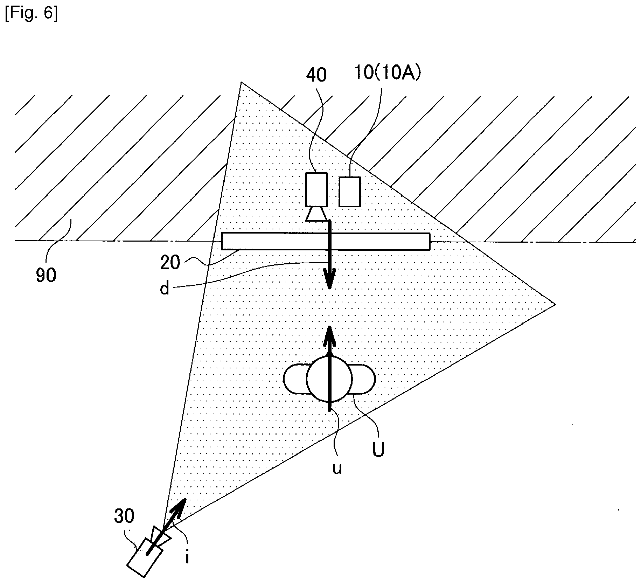

FIG. 6 is a diagram showing another example of the configuration of the display control system 1A according to the first embodiment. As shown in FIG. 6, the another example of the display control system 1A according to the first embodiment of the present disclosure includes a display control device 10A, a display device 20, an imaging device 30, and a detection device 40. Further, in the another example of the configuration of the display control system 1A shown in FIG. 6, the display device 20 is included in the area to be imaged by the imaging device 30.

As described above, the first mode and the second mode may be switched therebetween based on the relationship between the angle between the direction i of the imaging device and the direction d of the display device and a predetermined threshold. As shown in FIG. 6, in the case where the display device 20 is shown in the captured image taken by the imaging device 30, the mode setting section 120 may use the angle of the display device 20 recognized from the captured image as the angle between the direction i of the imaging device and the direction d of the display device.

For example, in the case where an attitude of a screen displayed by the display device 20 is recognized, the angle of the display device 20 may be recognized by the attitude of the screen, and in the case where an attitude of the display device 20 itself is recognized, the angle of the display device 20 may be recognized by the attitude of the display device 20 itself. For example, in the case where the display device 20 is shown in the captured image with the front surface thereof facing front, angle between the direction i of the imaging device and the direction d of the display device is 180 degrees, and in the case where the display device 20 is shown in the captured image with the back surface thereof facing front, the angle between the direction i of the imaging device and the direction d of the display device is 0 degrees.

Note that, in the case where the mode is being set to the second mode, the virtual object for operation is added in the three-dimensional space recognized from the captured image. However, in the case where the virtual object for operation is added at a position deeper than the position of the display device 20, it becomes necessary for the user U to stretch his/her hand behind the display device 20 in order to select the virtual object for operation, which enforces the user U to perform unnatural motion. Accordingly, in the case where the mode is being set to the second mode by the mode setting section 120, the display control section 150 may limit the addition of the virtual object for operation at a position deeper than the position of the display device 20 shown in the captured image.

For example, in the case where the mode is being set to the second mode by the mode setting section 120, the display control section 150 may prohibit the addition of the virtual object for operation at a position deeper than the position of the display device 20 shown in the captured image. In the example shown in FIG. 6, the region behind the display device 20 is shown as a virtual object addition-prohibited region 90. For example, in the case where the mode is being set to the second mode by the mode setting section 120, the display control section 150 may prohibit the addition of the virtual object for operation at a position deeper than the position of the display device 20 shown in the captured image, and may add the virtual object for operation at a position in front of the position of the display device 20 shown in the captured image.

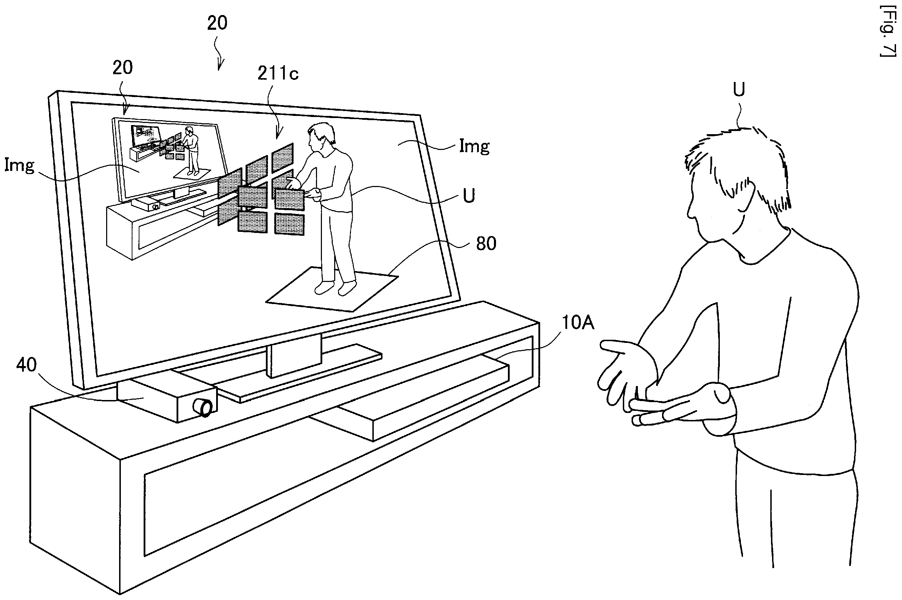

FIG. 7 is a diagram showing an example of addition of the virtual object for operation in a case where the display control system 1A is configured in accordance with the example shown in FIG. 6. As shown in FIG. 7, also in the case where the display device 20 is included in the imaging area, a captured image Img taken by the imaging device 30 is displayed on the display device 20, and the virtual objects 211c for operation are added to the captured image Img. However, since the display device 20 is included in the captured image Img and the captured image Img is also displayed on the display device 20, multiple captured images Img are displayed successively.

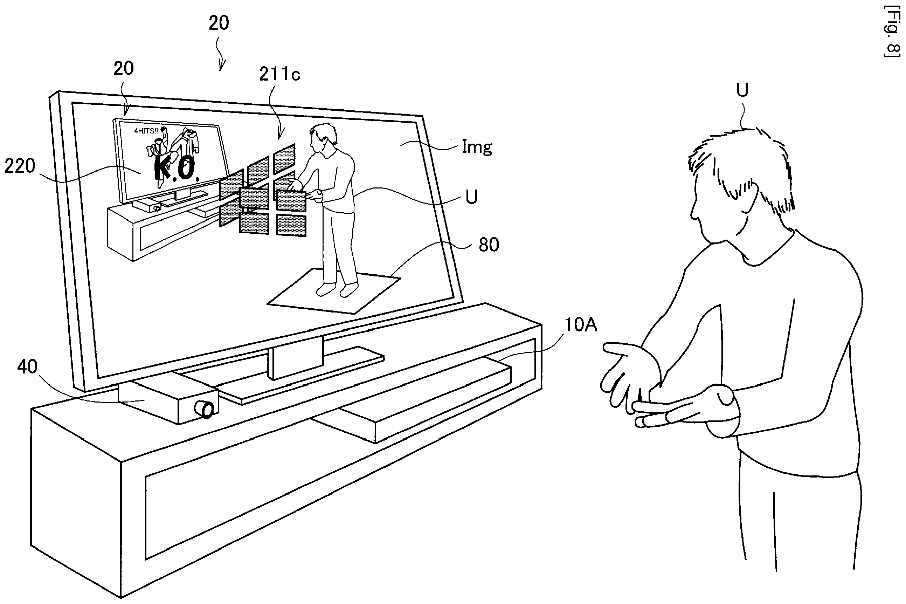

FIG. 8 is a diagram showing another example of the addition of the virtual object for operation in the case where the display control system 1A is configured in accordance with the example shown in FIG. 6. In order to avoid the successive display as described above, when the mode is being set to the second mode by the mode setting section 120, the display control section 150 may replace the image displayed by the display device 20 shown in the captured image Img with another image. The another image is not particularly limited, and as shown in FIG. 8, for example, the display control section 150 may replace the image displayed by the display device 20 shown in the captured image Img with a computer image 220.

Heretofore, the case has been described in which the display device 20 is included in the area to be imaged by the imaging device 30. However, since the addition of the virtual object for operation is performed without particularly taking into account the position of the body of the user U in the description above, there is also considered a situation where the body of the user U is hidden by the virtual object for operation. Hereinafter, description will be made on an example in which such a situation is avoided and the user operability is further enhanced.

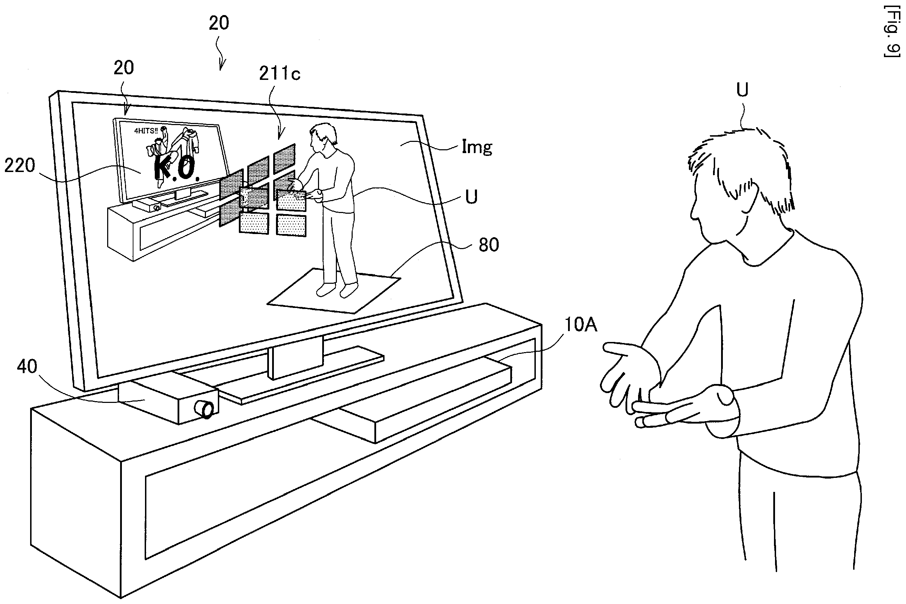

FIG. 9 is a diagram showing an example in which a display of the virtual object for operation is changed. For example, in the case where the mode is being set to the second mode by the mode setting section 120, when the virtual object for operation overlaps the user U in the captured image, the display control section 150 may cause the display of the virtual object for operation to change. The overlap of the virtual object 211c for operation with the user U may be determined based on the overlap of a predetermined region within the virtual object 211c for operation with the user U, or may be determined based on the overlap of a part exceeding a predetermined amount of the virtual object 211c for operation with the user U.

In the example shown in FIG. 9, since the virtual object 211c for operation overlaps the user U in the captured image, the display control section 150 adds the virtual object 211c for operation having a reduced transmittance to the captured image, and thus causes the display of the virtual object 211c for operation to change. The reduction degree of the transmittance is not particularly limited. With such a control, it becomes easier for the user U to grasp the position of the body of the user U himself/herself.

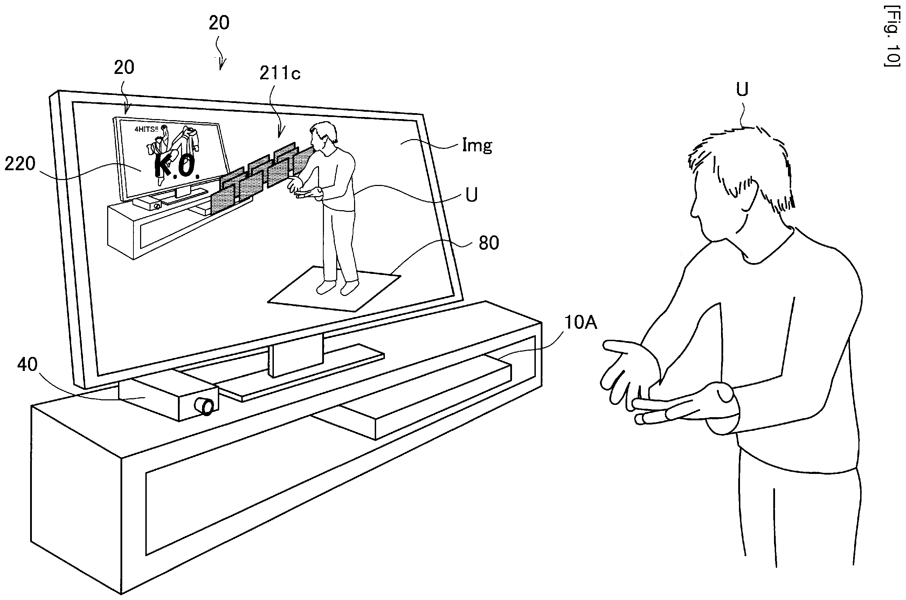

FIG. 10 is a diagram showing another example in which the display of the virtual object for operation is changed. In the example shown in FIG. 10, since the virtual object 211c for operation overlaps the user U in the captured image, the display control section 150 adds the virtual object 211c for operation at a position that does not overlap with the user U, and thus causes the display of the virtual object 211c for operation to change. In particular, in the example shown in FIG. 10, the virtual object 211c for operation is moved in a manner that the virtual object 211c approaches the display device 20. With such a control, it becomes easier for the user U to grasp the position of the body of the user U himself/herself.

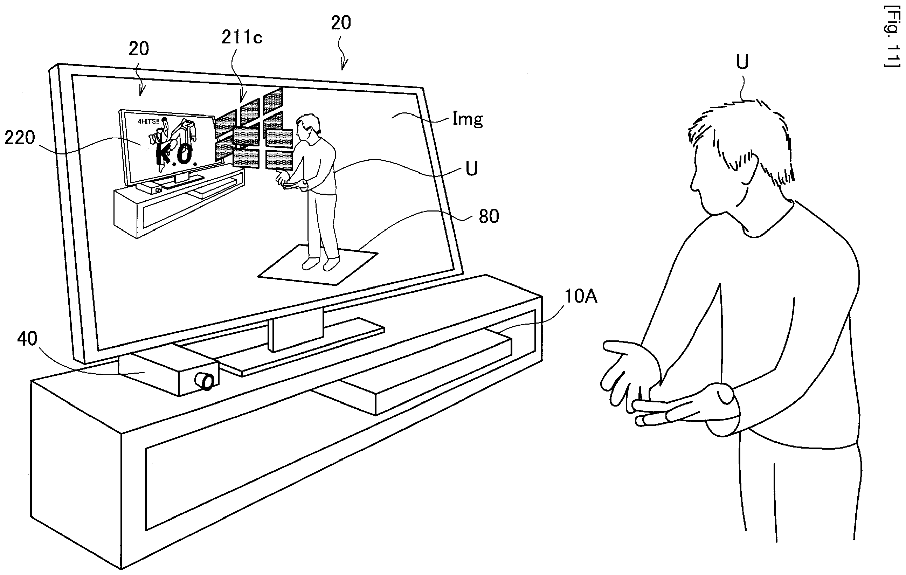

FIG. 11 is a diagram showing another example in which the display of the virtual object for operation is changed. In the example shown in FIG. 11, since the virtual object 211c for operation overlaps the user U in the captured image, the display control section 150 adds the virtual object 211c for operation at a position that does not overlap with the user U, and thus causes the display of the virtual object 211c for operation to change. In particular, in the example shown in FIG. 11, the height of the virtual object 211c for operation is changed. With such a control, it becomes easier for the user U to grasp the position of the body of the user U himself/herself.

Heretofore, the description has been made on the example for avoiding the situation where the body of the user U is hidden by the virtual object for operation. Hereinafter, there will be described a flow of operation performed by the display control device 10A according to the first embodiment.

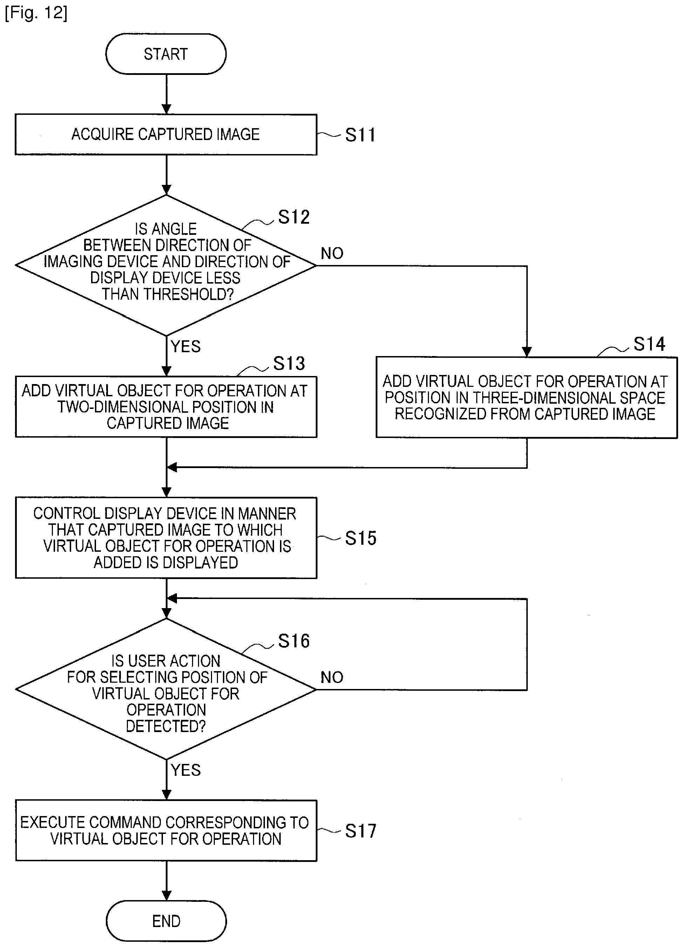

FIG. 12 is a flowchart showing a flow of operation performed by the display control device 10A according to the first embodiment. As shown in FIG. 12, first, the image acquisition section 110 acquires a captured image taken by the imaging device 30 (Step S11). In the case where the angle between the direction i of the imaging device and the direction d of the display device is less than a threshold ("YES" in Step S12), the mode setting section 120 sets the mode to the first mode. On the other hand, in the case where the angle between the direction i of the imaging device and the direction d of the display device is more than the threshold ("NO" in Step S12), the mode setting section 120 sets the mode to the second mode.

In the case where the mode is set to the first mode by the mode setting section 120, the display control section 150 adds the virtual object for operation at a two-dimensional position in the captured image (Step S13). On the other hand, in the case where the mode is set to the second mode by the mode setting section 120, the display control section 150 adds the virtual object for operation at a position in the three-dimensional space recognized from the captured image (Step S14).

When the virtual object for operation is added to the captured image, the display control section 150 controls the display device 20 in a manner that the captured image to which the virtual object for operation is added is displayed on the display device 20 (Step S15). When the display device 20 displays the captured image to which the virtual object for operation is added in accordance with the control performed by the display control section 150, the processing proceeds to Step S16.

Next, the action detection section 160 determines whether a user action for selecting the position of the virtual object for operation is detected (Step S16). In the case where the user action for selecting the position of the virtual object for operation is not detected ("NO" in Step S16), the action detection section 160 performs the determination of Step S16 until the user action for selecting the position of the virtual object for operation is detected. On the other hand, in the case where the user action for selecting the position of the virtual object for operation is detected by the action detection section 160 ("YES" in Step S16), the command execution section 170 executes the command corresponding to the virtual object for operation (Step S 17), and the operation is terminated.

As described above, according to the first embodiment of the present disclosure, the display of the virtual object for operation is controlled in accordance with the positional relationship between the imaging device 30 and the display device 20. For example, the mode may be set to any one of the first mode or the second mode in accordance with the angle between the direction i of the imaging device and the direction d of the display device, and the display of the virtual object for operation is controlled according to the mode that has been set. With such a control, it is expected that the user operability will be enhanced.

### <2. Second Embodiment>

Next, a second embodiment of the present disclosure will be described. The second embodiment of the present disclosure is an example in which a display control system includes multiple imaging devices 30. Accordingly, any one of the multiple imaging devices 30 is selected as an imaging device 30 that is a providing source of a captured image. Further, a mode can be changed in accordance with the selection of the imaging device 30. First, an example of a configuration of a display control system according to the second embodiment of the present disclosure will be described.

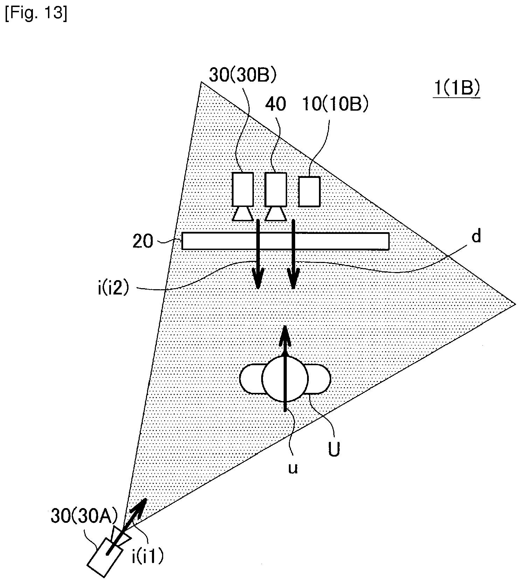

FIG. 13 is a diagram showing an example of a configuration of a display control system according to the second embodiment. As shown in FIG. 13, a display control system 1B according to the second embodiment of the present disclosure includes a display control device 10B, a display device 20, multiple imaging devices 30, and a detection device 40. The multiple imaging devices 30 has a function of imaging a user U. The display control device 10B has a function of controlling the display device 20 in a manner that a captured image taken by an imaging device 30 selected from the multiple imaging devices 30 is displayed on the display device 20. The display device 20 has a function of displaying the captured image in accordance with the control performed by the display control device 10B.

Note that, although FIG. 13 shows an imaging device 30A and an imaging device 30B as examples of the multiple imaging devices 30, the number of the imaging devices 30 is not limited to two. Further, in FIG. 13, the direction of the imaging device 30A and the direction of the imaging device 30B are represented by a direction i1 of the imaging device and a direction i2 of the imaging device, respectively. In the same manner as in the first embodiment, the display control device 10B may be embedded in a STB, may be embedded in the display device 20, or may be embedded in the imaging device 30. Further, the display control device 10B may be embedded in another device, or may not be embedded in another device and may exist as a single device.

Heretofore, there has been described an example of the configuration of the display control system 1B according to the second embodiment of the present disclosure. Next, there will be described functions of the display control device 10B in the case where the display control system 1B is configured as shown in the example.

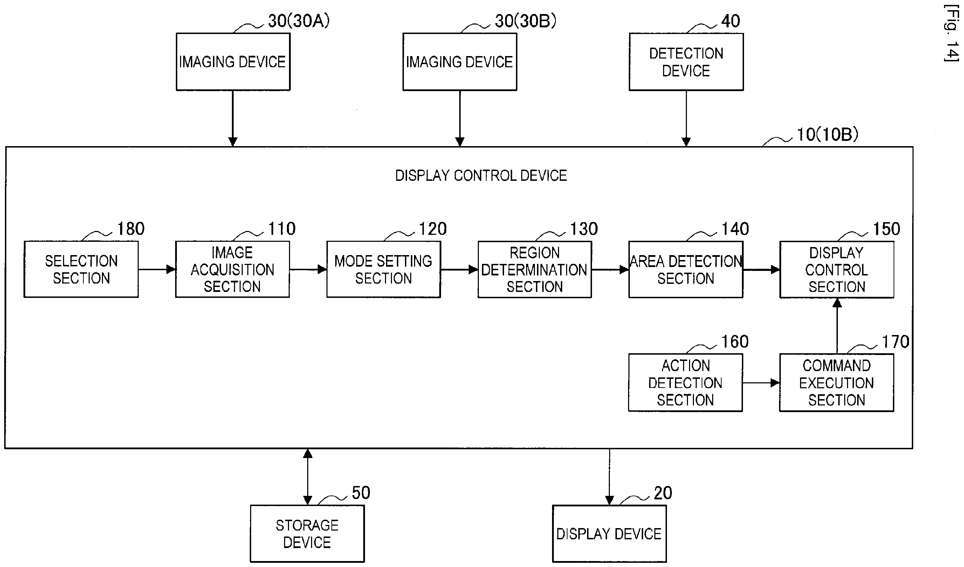

FIG. 14 is a block diagram showing a functional configuration example of a display control device 10B according to the second embodiment. As shown in FIG. 14, the display control device 10B is connected to the display device 20, the multiple imaging devices 30, the detection device 40, and to a storage device 50. The display control device 10B corresponds to a processor such as a CPU or a DSP. The display control device 10B executes a program stored in the storage device 50 or another storage medium, and thereby operating various functions of the display control device 10B.

Further, as shown in FIG. 14, the display control device 10B includes a selection section 180 in addition to the functional blocks included in the display control device 10A. The selection section 180 has a function of, in the case where multiple imaging devices 30 are installed, selecting one imaging device 30 from among the multiple imaging devices 30. The image acquisition section 110 acquires a captured image taken by the imaging device 30 which is selected by the selection section 180.

The technique of selecting an imaging device 30 performed by the selection section 180 is not particularly limited. For example, the selection section 180 may select an imaging device 30 based on the state of the user U, which is detected by the action detection section 160. As an example, there is given the following case: in the case where a user action for specifying an imaging device 30 is detected by the action detection section 160, the selection section 180 may select the imaging device 30 specified by the user action. The user action for specifying the imaging device 30 is not particularly limited, and the user action may be, in the case where a virtual object for specifying the imaging device 30 is displayed, an action of selecting the virtual object, for example.

Further, as another example, there is given the following case: the selection section 180 may select an imaging device 30 based on angles between a direction u of the user and the respective directions of the multiple imaging devices 30. For example, the selection section 180 may select the imaging device 30 which has a direction forming the largest angle with the direction u of the user. This is because it is expected that with increase in the angle between the direction u of the user and the direction i of the imaging device, operation by the user U is performed more easily.

In the example shown in FIG. 13, since the angle between the direction u of the user and the direction i2 of the imaging device is larger than the angle between the direction u of the user and the direction i1 of the imaging device, the selection section 180 may select the imaging device 30B. Note that there is also considered a case where the operation by the user U becomes easier with decrease in the angle. Accordingly, depending on the setting performed by the user U, the imaging device 30 may be selected, which has a direction forming the smallest angle between the direction u of the user and the direction i of the imaging device.

Heretofore, functions of the display control system 1B according to the second embodiment of the present disclosure have been described. Next, there will be described a flow of operation performed by the display control device 10B of the second embodiment. In this operation, the operation of selecting one imaging device 30 from among the multiple imaging devices 30 is added to the operation of the display control device 10A according to the first embodiment.

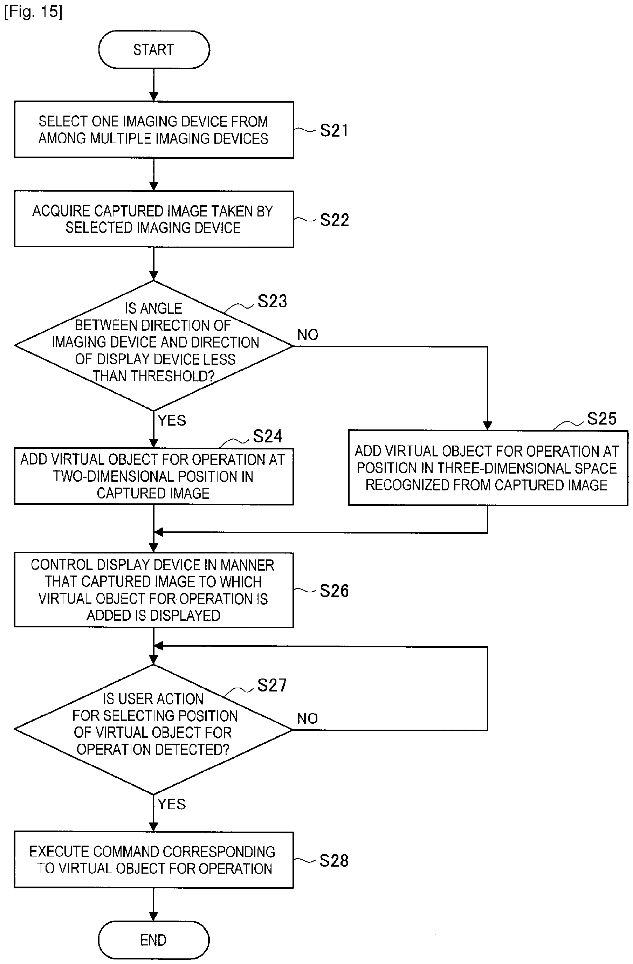

FIG. 15 is a flowchart showing a flow of operation performed by the display control device 10B according to the second embodiment. As shown in FIG. 15, first, the selection section 180 selects one imaging device 30 from among the multiple imaging devices 30 (Step S21). The image acquisition section 110 acquires a captured image taken by the selected imaging device 30 (Step S22). In the case where the angle between the direction i of the imaging device and the direction d of the display device is less than a threshold ("YES" in Step S23), the mode setting section 120 sets the mode to the first mode. On the other hand, in the case where the angle between the direction i of the imaging device and the direction d of the display device is more than the threshold ("NO" in Step S23), the mode setting section 120 sets the mode to the second mode.

In the case where the mode is set to the first mode by the mode setting section 120, the display control section 150 adds the virtual object for operation at a two-dimensional position in the captured image (Step S24). On the other hand, in the case where the mode is set to the second mode by the mode setting section 120, the display control section 150 adds the virtual object for operation at a position in the three-dimensional space recognized from the captured image (Step S25).

When the virtual object for operation is added to the captured image, the display control section 150 controls the display device 20 in a manner that the captured image to which the virtual object for operation is added is displayed on the display device 20 (Step S26). When the display device 20 displays the captured image to which the virtual object for operation is added in accordance with the control performed by the display control section 150, the processing proceeds to Step S27.

Next, the action detection section 160 determines whether a user action for selecting the position of the virtual object for operation is detected (Step S27). In the case where the user action for selecting the position of the virtual object for operation is not detected ("NO" in Step S27), the action detection section 160 performs the determination of Step S27 until the user action for selecting the position of the virtual object for operation is detected. On the other hand, in the case where the user action for selecting the position of the virtual object for operation is detected by the action detection section 160 ("YES" in Step S27), the command execution section 170 executes the command corresponding to the virtual object for operation (Step S28), and the operation is terminated.

As described above, according to the second embodiment of the present disclosure, one imaging device 30 is selected from among the multiple imaging devices 30 using the function of the selection section 180, and a captured image taken by the selected imaging device 30 is acquired by the image acquisition section 110. Therefore, according to the second embodiment, it is expected that the convenience of the user is further enhanced.

### <3. Conclusion>

As described above, according to the first embodiment of the present disclosure, there is provided the display control device 10 including the image acquisition section 110 which acquires a captured image taken by the imaging device 30, and the display control section 150 which controls the display device 20 in the manner that the captured image and the a virtual object for operation added to the captured image are displayed on the display device 20. The display control section 150 controls the display of the virtual object for operation in accordance with the positional relationship between the imaging device 30 and the display device 20.

According to such a configuration, the display of the virtual object for operation is controlled in accordance with the positional relationship between the imaging device 30 and the display device 20. For example, the mode may be set to any one of the first mode or the second mode in accordance with the angle between the direction i of the imaging device and the direction d of the display device, and the display of the virtual object for operation is controlled according to the mode that has been set. With such a control, it is expected that the user operability will be enhanced.

Further, according to the second embodiment of the present disclosure, there is provided the display control device 10B that further includes the selection section 180 which selects one imaging device 30 from among multiple imaging devices 30. According to such a configuration, a captured image taken by the imaging device 30 which is selected by the selection section 180 is acquired by the image acquisition section 110. Accordingly, it is expected that the convenience of the user is further enhanced.

It should be understood by those skilled in the art that various modifications, combinations, sub-combinations and alterations may occur depending on design requirements and other factors insofar as they are within the scope of the appended claims or the equivalents thereof.

Further, for example, in the above, the description has been made mainly on the example in which display control device 10 has the function of recognizing the display device 20 (or, the function of recognizing the screen displayed by the display device 20), but a server, instead of the display control device 10, may have such a function. For example, in the case where the display control device 10 transmits a captured image to the server, the server instead of the display control device 10 may recognize the display device 20 from the captured image. In this way, technology of the present disclosure may be applied to cloud computing.

Further, respective steps included in the operation of the display control device 10 of the present specification are not necessarily processed in chronological order in accordance with the flowcharts. For example, the respective steps included in the operation of the display control device 10 may be processed in different order from the flowcharts, or may be processed in a parallel manner.

Further, it is also possible to create a computer program for causing hardware such as a CPU, a ROM, or a RAM, which is built in the display control device 10, to exhibit equivalent functions as those of structures of the display control device 10 described above. Further, there is also provided a storage medium having the computer program stored therein.

Additionally, the present technology may also be configured as below.
(1) A display control device including a display control section to control display of a virtual object according to a positional relationship between an imaging device and a display device.
(2) The display control device according to (1), further including a mode setting section, and wherein the mode setting section sets a mode to one of at least a first mode in which the virtual object is added at a two-dimensional position within a captured image, and a second mode in which the virtual object is added at a three-dimensional position within a captured image.
(3) The display control device according to (1), further including a mode setting section, and wherein the mode is set based on an angle between a direction of the imaging device and a direction of the display device.
(4) The display control device according to (3), wherein the direction of the imaging device and the direction of the display device are input by a user.
(5) The display control device according to (1), further including a mode setting section, and wherein the mode is set based on an angle between a direction of the imaging device and a direction of a user.
(6) The display control device according to (1), further including a mode setting section, and wherein the mode is set based on information recognized from a captured image.
(7) The display control device according to any one of (1) to (6), wherein display of the virtual object is controlled based on a movable area of a user.
(8) The display control device according to (7), wherein the movable area is a movable area of the whole body of the user.
(9) The display control device according to (7), wherein the movable area is a movable area of a part of the whole body of the user.
(10) The display control device according to any one of (1) to (9), wherein display of the virtual object is controlled based on a movable area of an object moved by the user.
(11) The display control device according to any one of (1) to (10), further including a detection section to detect selection of the virtual object by a user.
(12) The display control device according to (11), further including an execution section to execute a command corresponding to the virtual object when the user selects the virtual object.
(13) The display control device according to (11) or (12), wherein the virtual object is selected by a gesture of the user.
(14) The display control device according to (13), wherein the gesture is a movement of the user's body or body part.
(15) The display control device according to any one of (1) to (14), wherein the display control device changes display of the virtual object when the virtual object overlaps with a user within a captured image.
(16) The display control device according to (15), wherein the display control device reduces a transmittance of the virtual object when the virtual object overlaps with a user within a captured image.
(17) The display control device according to (15), wherein the display control device changes the position of the virtual object when the virtual object overlaps with a user within a captured image.
(18) The display control device according to any one of (1) to (17), wherein the display control device sets a virtual object addition-prohibited region.
(19) The display control device according to any one of (1) to (18), wherein the display device is operable to display a captured image and to replace at least a portion of the captured image.
(20) The display control device according to any one of (1) to (19), further including a selection section to control selection of one of a multiple of imaging devices, and wherein display of the virtual object is controlled according to a positional relationship between the selected one of the multiple of imaging devices and the display device.
(21) The display control device according to (20), wherein selection of one of the multiple of imaging devices is based on a state of a user.
(22) The display control device as recited in claim (20) or (21), wherein selection of one of the multiple of imaging devices is based on angles between a direction of the user and respective directions of the imaging devices.
(23) A display control method including controlling display of a virtual object according to a positional relationship between an imaging device and a display device.
(24) A non-transitory computer-readable medium having stored thereon on computer-readable program to implement a display control method including controlling display of a virtual object according to a positional relationship between an imaging device and a display device.

Further, the present technology may also be configured as below.
(1) A display control device including:
   an image acquisition section which acquires a captured image taken by an imaging device; and
   a display control section which controls a display device in a manner that the captured image and a virtual object for operation added to the captured image are displayed on the display device,
   wherein the display control section controls a display of the virtual object for operation in accordance with a positional relationship between the imaging device and the display device.
(2) The display control device according to (1), further including a mode setting section which set a mode to any one of a first mode in which the virtual object for operation is added at a two-dimensional position in the captured image or a second mode in which the virtual object for operation is added at a position in a three-dimensional space recognized from the captured image,
   wherein the display control section performs addition of the virtual object for operation in accordance with a mode set by the mode setting section.
(3) The display control device according to (2),
   wherein the mode setting section sets the mode to any one of the first mode or the second mode in accordance with an angle between a direction of the imaging device and a direction of the display device.
(4) The display control device according to (3),
   wherein, in a case where the angle between the direction of the imaging device and the direction of the display device is less than a predetermined threshold, the mode setting section sets the mode to the first mode, and in a case where the angle between the direction of the imaging device and the direction of the display device is more than the predetermined threshold, the mode setting section sets the mode to the second mode.
(5) The display control device according to any one of (2) to (4),
   wherein,
   in a case where the mode is set to the first mode, when an angle between a direction of a user and a direction of the imaging device is more than a predetermined upper limit, the mode setting section sets the mode to the second mode, and in a case where the mode is set to second mode, when the angle between the direction of the user and the direction of the imaging device is less than a predetermined lower limit, the mode setting section sets the mode to the first mode.
(6) The display control device according to any one of (1) to (5), further including:
   an action detection section which detects a user action; and
   a command execution section which executes a command corresponding to the virtual object for operation in a case where a user action for selecting the virtual object for operation is detected by the action detection section.
(7) The display control device according to (6),
   wherein the action detection section detects the user action based on data detected by a detection device which is installed separately from the imaging device.
(8) The display control device according to any one of (3) to (5),
   wherein the mode setting section uses an angle of the display device recognized from the captured image as the angle between the direction of the imaging device and the direction of the display device.
(9) The display control device according to any one of (3) to (5),
   wherein the mode setting section uses a direction of a user as the direction of the display device.
(10) The display control device according to any one of (2) to (5),
   wherein, in a case where the mode is set to the second mode by the mode setting section, when the virtual object for operation overlaps a user in the captured image, the display control section causes the display of the virtual object for operation to change.
(11) The display control device according to (10),
   wherein the display control section adds a virtual object for operation having a reduced transmittance to the captured image, and causes the display of the virtual object for operation to change.
(12) The display control device according to (10),
   wherein the display control section adds the virtual object for operation at a position that does not cause an overlap, and causes the display of the virtual object for operation to change.
(13) The display control device according to any one of (2) to (5),
   wherein, in a case where the mode is set to the second mode by the mode setting section, the display control section limits the addition of the virtual object for operation at a position deeper than a position of the display device shown in the captured image.
(14) The display control device according to any one of (2) to (5),
   wherein, in a case where the mode is set to the second mode by the mode setting section, the display control section replaces an image displayed by the display device shown in the captured image with another image.
(15) The display control device according to any one of (1) to (14), further including
   a region determination section which determines a region in which selection of the virtual object for operation is possible in accordance with the positional relationship between the imaging device and the display device,
   wherein the display control section adds, to the region determined by the region determination section, a virtual object for display which indicates that the region represents a region in which the selection of the virtual object for operation is possible.
(16) The display control device according to any one of (1) to (15), further including
   an area detection section which detects a movable area of a user, wherein the display control section controls a position of the virtual object for operation further based on the movable area of the user detected by the area detection section.
(17) The display control device according to any one of (1) to (16), further including
   a selection section which selects, in a case where a plurality of imaging devices are installed, one imaging device from among the plurality of imaging devices, wherein the image acquisition section acquires a captured image taken by the imaging device selected by the selection section.
(18) The display control device according to (17),
   wherein the selection section selects an imaging device based on a state of a user.
(19) A display control method including:
   acquiring a captured image taken by an imaging device;
   controlling a display device in a manner that the captured image and a virtual object for operation added to the captured image are displayed on the display device; and controlling a display of the virtual object for operation in accordance with a positional relationship between the imaging device and the display device.
(20) A program for causing a computer to function as a display control device including
   an image acquisition section which acquires a captured image taken by an imaging device, and
   a display control section which controls a display device in a manner that the captured image and a virtual object for operation added to the captured image are displayed on the display device,
   wherein the display control section controls a display of the virtual object for operation in accordance with a positional relationship between the imaging device and the display device.

### Reference Signs List

1(1A, 1B) Display control system
10(10A, 10B) Display control device
20 Display device
30(30A, 30B) Imaging device
40 Detection device
70 Movable area
80 Virtual object for display
90 Virtual object addition-prohibited region
110 Image acquisition section
120 Mode setting section
130 Region determination section
140 Area detection section
150 Display control section
160 Action detection section
170 Command execution section
180 Selection section
211a, 211b, 211c Virtual object for operation

## Claims

1. A display control device comprising
a display control section (150) to control display of a virtual object (211a-c) according to a positional relationship between an imaging device (30) and a display device (20), wherein the virtual object (211a-c) is for operation of an application and is selectable by a user (U),
a detection section (160) to detect selection of the virtual object (211a-c) by the user (U), and
a mode setting section (120), wherein the mode setting section (120) sets a mode to one of at least a first mode in which the virtual object (211a-c) is added at a two-dimensional position within a captured image, and a second mode in which the virtual object is added at a three-dimensional position within a captured image, wherein the first mode and the second mode are set based on an angle between a direction (i) of the imaging device (30) and a direction (d) of the display device (20), and wherein the mode is additionally set based on an angle between a direction (i) of the imaging device (30) and a direction (u) of the user(U).

2. The display control device as recited in claim 1, wherein the mode is set based on information recognized from a captured image.

3. The display control device as recited in claim 1, wherein display of the virtual object (211a-c) is controlled based on a movable area (70) of a user (U) or based on a movable area of an object moved by the user.

4. The display control device as recited in claim 3, wherein the movable area (70) is a movable area of the whole body of the user, or wherein the movable area is a movable area of a part of the whole body of the user.

5. The display control device as recited in claim 4, further comprising an execution section (170) to execute a command corresponding to the virtual object (211a-c) when the user (U) selects the virtual object (211a-c).

6. The display control device as recited in claim 5, wherein the virtual object (211a-c) is selected by a gesture of the user (U).

7. The display control device as recited in claim 1, wherein the display control device changes display of the virtual object (211a-c) when the virtual object overlaps with a user (U) within a captured image.

8. The display control device as recited in claim 7, wherein the display control device reduces a transmittance of the virtual object (211a-c) when the virtual object overlaps with a user within a captured image, or wherein the display control device changes the position of the virtual object (211a-c) when the virtual object overlaps with a user within a captured image.

9. The display control device as recited in claim 1, wherein the display control device sets a virtual object addition-prohibited region (90).

10. The display control device as recited in claim 1, further comprising a selection section (180) to control selection of one of a multiple of imaging devices (30A, 30B), and wherein display of the virtual object (211a-c) is controlled according to a positional relationship between the selected one of the multiple of imaging devices (30A, 30B) and the display device (20).

11. The display control device as recited in claim 10, wherein selection of one of the multiple of imaging devices (30A, 30B) is based on a state of a user (U).

12. The display control device as recited in claim 11, wherein selection of one of the multiple of imaging devices (30A, 30B) is based on angles between a direction (u) of the user (U) and respective directions (i1, i2) of the imaging devices (30A, 30B).

13. A display control method comprising
controlling (S15, S26) display of a virtual object according to a positional relationship between an imaging device and a display device, wherein the virtual object is for operation of an application and is selectable by a user,
detecting selection of the virtual object by the user, and
setting (S13, S14, S25, S25) a mode to one of at least a first mode in which the virtual object is added at a two-dimensional position within a captured image, and a second mode in which the virtual object is added at a three-dimensional position within a captured image, wherein the first mode and the second mode are set based on an angle between a direction of the imaging device and a direction of the display device, and wherein the mode is additionally set based on an angle between a direction (i) of the imaging device (30) and a direction (u) of a user (U).

14. A non-transitory computer-readable medium having stored thereon on computer-readable program to implement a display control method in accordance with claim 13.

## Patentansprüche

1. Anzeigensteuervorrichtung, umfassend einen Anzeigensteuerabschnitt (150) zum Steuern des Anzeigens eines virtuellen Objekts (211a-c) gemäß einer Positionsbeziehung zwischen einer Bildgebungsvorrichtung (30) und einer Anzeigevorrichtung (20), wobei das virtuelle Objekt (211a-c) für den Betrieb einer Anwendung bestimmt und von einem Benutzer (U) auswählbar ist,
einen Erfassungsabschnitt (160) zum Erfassen der Auswahl des virtuellen Objekts (211a-c) durch den Benutzer (U) und
einen Moduseinstellabschnitt (120), wobei der Moduseinstellabschnitt (120) einen Modus auf einen mindestens eines ersten Modus stellt, bei dem das virtuelle Objekt (211a-c) an einer zweidimensionalen Position innerhalb eines erfassten Bilds hinzugefügt wird, und einem zweiten Modus, bei dem das virtuelle Objekt an einer dreidimensionalen Position innerhalb eines erfassten Bilds hinzugefügt wird, wobei der erste Modus und der zweite Modus basierend auf einem Winkel zwischen einer Richtung (i) der Bildgebungsvorrichtung (30) und einer Richtung (d) der Anzeigevorrichtung (20) eingestellt werden, und wobei der Modus zusätzlich basierend auf einem Winkel zwischen einer Richtung (i) der Bildgebungsvorrichtung (30) und einer Richtung (u) des Benutzers (U) eingestellt wird.

2. Anzeigensteuervorrichtung nach Anspruch 1, wobei der Modus basierend auf Informationen eingestellt wird, die aus einem erfassten Bild erkannt werden.

3. Anzeigensteuervorrichtung nach Anspruch 1, wobei die Anzeige des virtuellen Objekts (211a-c) basierend auf einer bewegbaren Fläche (70) eines Benutzers (U) oder basierend auf einer bewegbaren Fläche eines Objekts, das von dem Benutzer bewegt wird, gesteuert wird.

4. Anzeigensteuervorrichtung nach Anspruch 3, wobei die bewegbare Fläche (70) eine bewegbare Fläche eines gesamten Körpers des Benutzers ist, oder wobei die bewegbare Fläche eine bewegbare Fläche eines Teils des gesamten Körpers des Benutzers ist.

5. Anzeigensteuervorrichtung nach Anspruch 4, die ferner einen Ausführungsabschnitt (170) umfasst, um einen Befehl auszuführen, der einem virtuellen Objekt (211a-c) entspricht, wenn der Benutzer (U) das virtuelle Objekt (211a-c) auswählt.

6. Anzeigensteuervorrichtung nach Anspruch 5, wobei das virtuelle Objekt (211a-c) durch eine Geste des Benutzers (U) ausgewählt wird.

7. Anzeigensteuervorrichtung nach Anspruch 1, wobei die Anzeigensteuervorrichtung die Anzeige des virtuellen Objekts (211a-c) ändert, wenn das virtuelle Objekt einen Benutzer (U) innerhalb eines erfassten Bilds überlagert.

8. Anzeigensteuervorrichtung nach Anspruch 7, wobei die Anzeigensteuervorrichtung einen Durchlassgrad des virtuellen Objekts (211a-c) verringert, wenn das virtuelle Objekt einen Benutzer innerhalb eines erfassten Bilds überlagert, oder wobei die Anzeigensteuervorrichtung die Position des virtuellen Objekts (211a-c) ändert, wenn das virtuelle Objekt einen Benutzer innerhalb eines erfassten Bilds überlagert.

9. Anzeigensteuervorrichtung nach Anspruch 1, wobei die Anzeigensteuervorrichtung einen Hinzufügeverbotbereich (90) für virtuelles Objekt einstellt.

10. Anzeigensteuervorrichtung nach Anspruch 1, die ferner einen Auswahlabschnitt (180) umfasst, um die Auswahl einer einer Vielzahl von Bildgebungsvorrichtungen (30A, 30B) zu steuern, und wobei die Anzeige des virtuellen Objekts (211a-c) gemäß einer Positionsbeziehung zwischen der ausgewählten der Vielzahl von Bildgebungsvorrichtungen (30A, 30B) und der Anzeigenvorrichtung (20) gesteuert wird.

11. Anzeigensteuervorrichtung nach Anspruch 10, wobei die Auswahl einer der Vielzahl von Bildgebungsvorrichtungen (30A, 30B) auf einem Zustand eines Benutzers (U) basiert.

12. Anzeigensteuervorrichtung nach Anspruch 11, wobei die Auswahl einer der Vielzahl von Bildgebungsvorrichtungen (30A, 30B) auf Winkeln zwischen einer Richtung (u) des Benutzers (U) und jeweiligen Richtungen (i1, i2) der Bildgebungsvorrichtungen (30A, 30B) basiert.

13. Anzeigensteuerverfahren, das Folgendes umfasst Steuern (S15, S26) der Anzeige eines virtuellen Objekts gemäß einer Positionsbeziehung zwischen einer Bildgebungsvorrichtung und einer Anzeigevorrichtung, wobei das virtuelle Objekt für den Betrieb einer Anwendung bestimmt und von einem Benutzer auswählbar ist,
Erfassen der Auswahl des virtuellen Objekts durch den Benutzer, und
Einstellen (S13, S14, S25, S25) eines Modus auf einen mindestens eines ersten Modus, in dem das virtuelle Objekt an einer zweidimensionalen Position innerhalb eines erfassten Bilds hinzugefügt wird, und eines zweiten Modus, bei dem das virtuelle Objekt an einer dreidimensionalen Position innerhalb eines erfassten Bilds hinzugefügt wird, wobei der erste Modus und der zweite Modus basierend auf einem Winkel zwischen einer Richtung der Bildgebungsvorrichtung und einer Richtung der Anzeigevorrichtung eingestellt wird, und wobei der Modus zusätzlich basierend auf einem Winkel zwischen einer Richtung (i) der Bildgebungsvorrichtung (30) und einer Richtung (u) eines Benutzers (U) eingestellt wird.

14. Nichtflüchtiges computerlesbares Medium, auf dem ein computerlesbares Programm gespeichert ist, um ein Anzeigensteuerverfahren in Übereinstimmung mit Anspruch 13 umzusetzen.

## Revendications

1. Dispositif de commande d'affichage comprenant :
une section de commande d'affichage (150) pour commander l'affichage d'un objet virtuel (211a à 211c) en fonction d'une relation de position entre un dispositif d'imagerie (30) et un dispositif d'affichage (20), dans lequel l'objet virtuel (211a à 211c) est destiné au fonctionnement d'une application et peut être sélectionné par un utilisateur (U),
une section de détection (160) pour détecter une sélection de l'objet virtuel (211a à 211c) par l'utilisateur (U) et
une section de détermination de mode (120), dans lequel la section de détermination de mode (120) fixe un mode à un mode parmi au moins un premier mode dans lequel l'objet virtuel (211a à 211c) est ajouté à une position bidimensionnelle dans une image capturée, et un second mode dans lequel l'objet virtuel est ajouté à une position tridimensionnelle dans une image capturée, dans lequel le premier mode et le second mode sont fixés en se basant sur un angle formé entre une direction (i) du dispositif d'imagerie (30) et une direction (d) du dispositif d'affichage (20) et dans lequel le mode est, de plus, fixé en se basant sur un angle formé entre une direction (i) du dispositif d'imagerie (30) et une direction (u) de l'utilisateur (U) .

2. Dispositif de commande d'affichage selon la revendication 1, dans lequel le mode est réglé en se basant sur des informations reconnues à partir d'une image capturée.

3. Dispositif de commande d'affichage selon la revendication 1, dans lequel l'affichage de l'objet virtuel (211a à 211c) est commandé en se basant sur une zone mobile (70) d'un utilisateur (U) ou en se basant sur une zone mobile d'un objet déplacé par l'utilisateur.

4. Dispositif de commande d'affichage selon la revendication 3, dans lequel la zone mobile (70) est une zone mobile de tout le corps de l'utilisateur ou dans lequel la zone mobile est une zone mobile d'une partie de tout le corps de l'utilisateur.

5. Dispositif de commande d'affichage selon la revendication 4, comprenant en outre une section d'exécution (170) pour exécuter une commande correspondant à l'objet virtuel (211a à 211c) lorsque l'utilisateur (U) sélectionne l'objet virtuel (211a à 211c).

6. Dispositif de commande d'affichage selon la revendication 5, dans lequel l'objet virtuel (211a à 211c) est sélectionné par un geste de l'utilisateur (U).

7. Dispositif de commande d'affichage selon la revendication 1, dans lequel le dispositif de commande d'affichage change l'affichage de l'objet virtuel (211a à 211c) lorsque l'objet virtuel a des points communs avec un utilisateur (U) dans une image capturée.

8. Dispositif de commande d'affichage selon la revendication 7, dans lequel le dispositif de commande d'affichage réduit un facteur de transmission de l'objet virtuel (211a à 211c) lorsque l'objet virtuel a des points communs avec un utilisateur dans une image capturée ou dans lequel le dispositif de commande d'affichage change la position de l'objet virtuel (211a à 211c) lorsque l'objet virtuel a des points communs avec un utilisateur dans une image capturée.

9. Dispositif de commande d'affichage selon la revendication 1, dans lequel le dispositif de commande d'affichage détermine une région (90) dans laquelle l'ajout d'un objet virtuel est empêché.

10. Dispositif de commande d'affichage selon la revendication 1, comprenant en outre une section de sélection (180) pour commander la sélection d'un dispositif d'imagerie parmi une multitude de dispositifs d'imagerie (30A, 30B) et dans lequel l'affichage de l'objet virtuel (211a à 211c) est commandé en fonction d'une relation de position entre le dispositif d'imagerie sélectionné parmi la multitude de dispositifs d'imagerie (30A, 30B) et le dispositif d'affichage (20).

11. Dispositif de commande d'affichage selon la revendication 10, dans lequel la sélection d'un dispositif d'imagerie parmi la multitude de dispositifs d'imagerie (30A, 30B) est basée sur un état d'un utilisateur (U).

12. Dispositif de commande d'affichage selon la revendication 11, dans lequel la sélection d'un dispositif d'imagerie parmi la multitude de dispositifs d'imagerie (30A, 30B) est basée sur des angles formés entre une direction (u) de l'utilisateur (U) et des directions respectives (i1, i2) des dispositifs d'imagerie (30A, 30B).

13. Procédé de commande d'affichage consistant à :
commander (S15, S26) l'affichage d'un objet virtuel en fonction d'une relation de position entre un dispositif d'imagerie et un dispositif d'affichage, dans lequel l'objet virtuel est destiné au fonctionnement d'une application et peut être sélectionné par un utilisateur,
détecter une sélection de l'objet virtuel par l'utilisateur et
fixer (S13, S14, S25, S25) un mode à un mode parmi au moins un premier mode dans lequel l'objet virtuel est ajouté à une position bidimensionnelle dans une image capturée, et un second mode dans lequel l'objet virtuel est ajouté à une position tridimensionnelle dans une image capturée, dans lequel le premier mode et le second mode sont fixés en se basant sur un angle formé entre une direction du dispositif d'imagerie et une direction du dispositif d'affichage et dans lequel le mode est, de plus, fixé en se basant sur un angle formé entre une direction (i) du dispositif d'imagerie (30) et une direction (u) d'un utilisateur (U).

14. Support lisible par ordinateur non transitoire sur lequel est stocké un programme lisible par ordinateur pour mettre en oeuvre un procédé de commande d'affichage selon la revendication 13.
